(19) Europäisches Patentamt
European Patent Office
Office européen des brevets

(11) Veröffentlichungsnummer: **0 498 059 A2**

# (12) EUROPÄISCHE PATENTANMELDUNG

(21) Anmeldenummer: **91120890.8**

(51) Int. Cl.[5]: **C08G 69/32**, C08G 69/28

(22) Anmeldetag: **05.12.91**

(30) Priorität: **02.02.91 DE 4103210**

(43) Veröffentlichungstag der Anmeldung:
**12.08.92 Patentblatt 92/33**

(84) Benannte Vertragsstaaten:
**AT BE DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Poll, Günter, Dr.**
**Venusweg 9**
**W-4370 Marl(DE)**
Erfinder: **Finke, Jürgen, Dr.**
**Münsterlandstrasse 22**
**W-4370 Marl(DE)**
Erfinder: **Heuer, Horst**
**An der Landwehr 76**
**W-4358 Haltern(DE)**

## (54) Verfahren zur Herstellung eines thermoplastisch verarbeitbaren, aromatischen Polyamids.

(57) Es sollen aromatische Polyamide mit einer verbesserten Stabilität gegen Thermooxidation zur Verfügung gestellt werden.

Dies wurde dadurch erreicht, daß in Gegenwart von 0,05 bis 4 Mol-% eines Katalysators bestehend aus einem Gemisch aus Phosphorverbindungen und Metallsalzen polykondensiert wird.

Mit Hilfe des erfindungsgemäßen Verfahren gelingt es, gegen Thermooxidation stabile aromatische Polyamide zu erhalten.

EP 0 498 059 A2

Gegenstand der Erfindung ist ein Verfahren zur Herstellung eines thermoplastisch verarbeitbaren, aromatischen Polyamids durch Polykondensieren nachstehender Ausgangsmonomeren:

A. HOOC - Ar - COOH

B. $H_2N$ - Ar' - $NH_2$

hierbei bedeutet

Ar: 1.3- oder 1.4-Phenylen; 1.4-, 1.5-, 2.6- oder 2.7-Naphthylen,

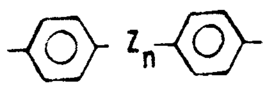

oder

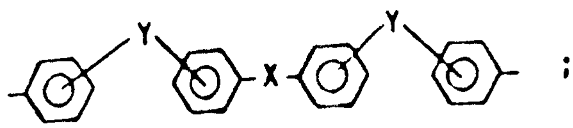

Ar':

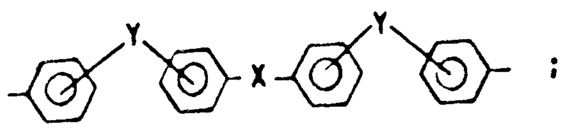

X: $-SO_2-$; -CO-;

Y: -O-; -S-;

Z: -O-; -S-; $-SO_2-$; -CO-; $-CR_2-$;

R: -H; $C_1$ - $C_4$-Alkyl;

n: 0; 1;

in der Schmelze in Gegenwart eines Katalysators bei Temperaturen im Bereich von 200 bis 400 °C.

Die Herstellung solcher Polyamide ist grundsätzlich bekannt (DE-OS 36 09 011). Die Schmelzviskosität dieser aromatischen Polyamide ist allerdings erheblich. Daher sind bei ihrer Herstellung und Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, aromatische Polyamide zur Verfügung zu stellen, die die geschilderten Nachteile der Produkte des Standes der Technik nicht aufweisen.

Diese Aufgabe wurde dadurch gelöst, daß die Reaktion in Gegenwart von Phosphorverbindungen und Metallsalzen, Zinn(II)salze sind ausgenommen, als Katalysator stattfindet, wobei der Gehalt an Phosphorverbindungen und Metallsalzen jeweils 0,05 bis 4 Mol-% - bezogen auf die Summe der Komponenten A. und B. - beträgt und die Phosphorverbindungen mindestens zu 0,025 Mol-% und die Metallsalze mindestens zu 0,025 Mol-% - jeweils bezogen auf die Summe der Komponenten A. und B. eingesetzt werden.

Als Phosphorverbindungen kommen Säuren der allgemeinen Formel $H_3PO_m$ mit m = 2 bis 4 sowie Derivate davon in Frage. Insbesondere sind Phosphor-Säure, Phosphorige Säure, Hypophosphorige Säure, Phosphonsäuren, z. B. Methanphosphonsäure, Phenylphosphonsäure; Phosphonigsäuren, z. B. Benzolphosphonigsäure; Phosphinsäure, z. B. Diphenylphosphinsäure, zu nennen.

Geeignete Metalle der 1. bis 3. Hauptgruppe des Periodensystems sind z. B. Lithium, Natrium, Kalium; Magnesium, Calcium, Barium, Aluminium. Ferner sind auch die Metalle Zink und Eisen geeignet.

Zur Salzbildung verwendbare Anionen sind z. B. Chlorid, Acetat, Stearat oder Anionen, die sich aus den oben angeführten erfindungsgemäßen Phosphorverbindungen bilden können.

Bevorzugt werden solche Metallsalze eingesetzt, die in der Reaktionsmischung löslich sind.

Der Katalysator aus Phosphorverbindung und Metallsalz ist zu 0,05 bis 4 Mol-%, vorzugsweise zu 0,2 bis 2 Mol-%, - bezogen auf die Komponenten A. und B. - in der Reaktionsmischung enthalten. Das molare

Verhältnis von Phosphorverbindung zu Metallsalz ist grundsätzlich frei wählbar. Es ist jedoch zu beachten, daß die Phosphorverbindung zumindest zu 0,025 Mol-% und das Metallsalz zumindest zu 0,025 Mol-% - jeweils bezogen auf die Summe der Komponenten A. und B. - im Reaktionsgemisch enthalten sind.

Als aromatische Dicarbonsäuren (Komponente A.) kommen Isophthalsäure, Terephthalsäure, 1.4-, 1.5-, 2.6-, 2.7-Naphthalindicarbonsäure, 4.4'-Diphenyletherdicarbonsäure oder 4.4'-Benzophenondicarbonsäure, 4.4'-Diphenylsulfondicarbonsäure, 2-Phenoxy-terephthalsäure, 4.4'-Biphenyldicarbonsäure oder Gemische davon in Frage.

Bevorzugt als Komponente A. wird Isophthalsäure allein oder ein Gemisch von Isophthalsäure mit einer weiteren der oben genannten Säuren eingesetzt. Im letzteren Fall werden bis zu 45 Mol-% Isophthalsäure ersetzt.

Als aromatische Diamine (Komponente B.) kommen z. B. 4.4'-Bis(4-aminophenoxy)diphenylsulfon, 4.4'-Bis(3-aminophenoxy)diphenylsulfon, 4.4'-Bis(4-aminophenoxy)benzophenon, 4.4'-Bis(3-aminophenoxy)-benzophenon, 4.4'-Bis(p-aminophenylmercapto)benzophenon, 4.4'-Bis(p-aminophenylmercapto)-diphenylsulfon oder Gemische davon in Frage.

Bevorzugt wird 4.4'-Bis(4-aminophenoxi)diphenylsulfon verwendet.

Das molare Einsatzverhältnis der Komponenten A. und B. bewegt sich im Bereich von etwa 1 : 1.

Die Glastemperatur ($T_g$) der aromatischen Polyamide liegt im Bereich von 190 bis 270 °C, die Viskositätszahlen (J-Werte) bei etwa 30 bis 180 $cm^3/g$; bevorzugt bei 60 bis 155 $cm^3/g$.

Um eine verbesserte Hydrolysebeständigkeit der Polyamide zu erreichen, können den aromatischen Polyamiden noch 0,01 bis 10 Mol-% - bezogen auf die Summe der Komponenten A. und B. - eines niedermolekularen aliphatischen, araliphatischen oder aromatischen Carbonsäureamids zugesetzt werden. Hierbei kann der aromatische Rest durch Halogen oder durch $C_1$- bis $C_4$-Alkylreste substituiert sein. Diese Maßnahme wird in DE-OS 38 04 401 beschrieben.

Die Hydrolysebeständigkeit kann ebenfalls dadurch verbessert werden, indem die Komponente A. in geringem Überschuß eingesetzt (DE-OS 39 35 467) oder, falls A. und B. ungefähr äquimolar vorliegen, zusätzlich eine Monocarbonsäure zugegeben wird (DE-OS 39 35 468).

Die Herstellung der aromatischen Polyamide ist grundsätzlich bekannt. Sie wird u. a. in DE-OS 36 09 011 beschrieben.

Eine bevorzugte Arbeitsweise bei der Herstellung der aromatischen Polyamide ist es, neben dem Katalysatorgemisch noch Dialkylaminopyridine als Cokatalysator einzusetzen.

Besonders geeignete Dialkylaminopyridine sind solche mit 1 bis 10 C-Atomen in der Alkylgruppe. Bevorzugt verwendet werden 4-Dimethylaminopyridin, 4-Dibutylaminopyridin, 4-Piperidinylpyridin, die gegebenenfalls zusammen mit dem Aminostickstoff einen Pyrrolidin- oder Piperidinring bilden können.

Sofern ein Gokatalysator benutzt wird, wird er in einer Menge von 0,05 bis 4 Mol-%, vorzugsweise von 0,2 bis 2 Mol-% - bezogen auf die Summe der Komponenten A. und B. - eingesetzt. In besonders bevorzugten Fällen wird der Gokatalysator in einer äquivalenten Menge zu dem Katalysatorgemisch in die Reaktionsmischung zugegeben.

Die Reaktion wird in der Schmelze bei Temperaturen im Bereich von 200 bis 400 °C, vorzugsweise von 230 bis 360 °C durchgeführt.

Üblicherweise wird unter Inertgas bei Normaldruck gearbeitet. Es kann jedoch auch bei Über- bzw. Unterdruck gearbeitet werden.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu Formmassen verarbeitet werden.

Die Formmassen können zusätzlich noch Füllstoffe, wie Talkum, oder Verstärkungsmittel, wie Glas-, ARAMID$^R$- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Nach dem erfindungsgemäßen Verfahren hergestellte aromatische Polyamide weisen eine unerwartet hohe Temperaturstabilität auf. Eine Verarbeitung der Produkte kann noch bei Temperaturen > 340 °C erfolgen, ohne daß eine Abnahme des Molekulargewichtes oder eine Braunfärbung eintritt. Ferner zeigen erfindungsgemäß erhaltene Formmassen eine hervorragende Stabilität gegenüber Thermooxidation, so daß sie noch bei deutlich höheren Temperaturen als entsprechende Massen des Standes der Technik eingesetzt werden können. Zu diesen Eigenschaften hinzuzurechnen ist eine gute Wärmestandfestigkeit, d. h. Formmassen, welche die erfindinngsgemäßen aromatischen Polyamide zur Basis haben, können über lange

Zeiträume hohen Temperaturen ausgesetzt werden, ohne daß ein deutlicher Verlust bei den mechanischen Eigenschaften auftritt.

Die in der Beschreibung und in den Beispielen genannten Parameter wurden mit Hilfe nachstehender Verfahren bestimmt.

Der Glaspunkt ($T_g$) wurde durch DSC bei einer Aufheizrate von 10 °C/min. bestimmt.

Die Viskositätszahlen (J) wurden an 0,5 Gew.-%igen Lösungen der Polyamide in einem Phenol/o-Dichlorbenzol-Gemisch (1 : 1 Gewichtsteile) bei 25 °C nach DIN 53 728 bestimmt.

Die Wärmealterung der Prüfkörper wurde bei 200 °C in einem Umluftofen mit 10 % Frischluftzufuhr durchgeführt.

Mit Buchstaben gekennzeichnete Beispiele sind nicht erfindungsgemäß.

## Beispiele

### Beispiel 1:

21,62 g (0,05 Mol) 4,4'-Bis(4-aminophenoxy)diphenylsulfon, 8,31 g (0,05 Mol) Isophthalsäure wurden mit 109 µl (0,001 Mol) Hypophosphoriger Säure und 158 mg (0,001 Mol) Calciumacetat in einem Polykondensationsreaktor mit Rührer, Stickstoffeinleitung und Destillationsbrücke bei 250 °C aufgeschmolzen. Die Temperatur wurde nach 20 Minuten auf 300 °C erhöht. Dabei nahm die Viskosität der Schmelze stetig zu, während das im Verlauf der Reaktion freiwerdende Wasser abdestilliert wurde. Nach 30 Minuten bei 300 °C wurde die Reaktion abgebrochen. Die Viskositätszahl (J) betrug 36 $cm^3/g$. Eine Festphasennachkondensation bei 250 °C und 0,5 mbar lieferte nach 24 h ein Polyamid mit J = 151 $cm^3/g$.

### Beispiel A:

21,62 g (0,05 Mol) 4,4'-Bis(4-aminophenoxy)diphenylsulfon und 8,31 g (0,05 Mol) Isophthalsäure wurden mit 109 µl (0,001 Mol) 50 %iger wässriger Hypophosphoriger Säure und 122 mg (0,001 Mol) 4-Dimethylaminopyridin analog Beispiel 1 umgesetzt. Die Viskositätszahl (J) des Polyamids betrug 35 $cm^3/g$. Die Festphasennachkondensation analog Beispiel 1 ergab ein Polyamid mit J = 75 $cm^3/g$.

### Beispiele 2 - 9:

Die Beispiele 2 - 9 wurden analog Beispiel 1 durchgeführt, jedoch wurden die Katalysatoren gemäß nachstehender Tabelle variiert.

### Wärmealterung

Die in den Beispielen 1 bis 9 und A hergestellten Polyamide wurden bei 310 °C und einem Druck von 100 bar zu Platten von 1 mm Dicke verpreßt und in einem Umluftofen 24 h gealtert. Das nach DE-OS 36 09 011 im Vergleichsbeispiel hergestellte Polyamid war dunkelbraun verfärbt, während die nach den Beispielen 1 bis 9 hergestellten Polyamide praktisch keine Veränderungen aufwiesen.

Tabelle

| Beispiel | Katalysator | | | | Cokatalysator | | J | J***) |
|---|---|---|---|---|---|---|---|---|
| | | [Mol-%] | | [Mol-%] | | [Mol-%] | [$cm^3/g$] | [$cm^3/g$] |
| 2 | PPS*) | 2.0 | Calciumacetat | 2.0 | DMAP**) | 2.0 | 34 | 84 |
| 3 | $H_3PO_2$ | 1.0 | Natriumacetat | 1.0 | - | - | 28 | 68 |
| 4 | PPS | 2.0 | bas. Aluminiumacetat | 2.0 | - | - | 28 | 118 |
| 5 | $H_3PO_3$ | 2.0 | Bariumacetat | 2.0 | - | - | 34 | 138 |
| 6 | PPS | 1.0 | Lithiumacetat | 1.0 | DMAP | 1.0 | 31 | 88 |
| 7 | $H_3PO_3$ | 0.2 | Zinkacetat | 0.2 | DMAP | 0.2 | 25 | 92 |
| 8 | PPS | 2.0 | Magnesiumacetat | 2.0 | - | - | 28 | 60 |
| 9 | $H_3PO_3$ | 1.0 | Zinkchlorid | 1.0 | - | - | 32 | 61 |

*) PPS: Phenylphosphonsäure

**) DMAP: 4-Dimethylaminopyridin

***) nach Festphasennachkondensation

## Patentansprüche

1. Verfahren zur Herstellung eines thermoplastisch verarbeitbaren, aromatischen Polyamids durch Polykondensieren nachstehender Ausgangsmonomeren:

   A. HOOC - Ar - COOH

B. $H_2N$ - Ar' - $NH_2$

hierbei bedeutet

Ar: 1.3-oder 1.4-Phenylen; 1.4-, 1.5-, 2.6- oder 2.7-Naphthylen,

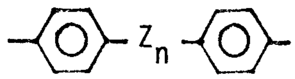

oder

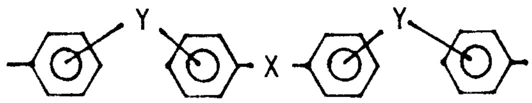

;

Ar':

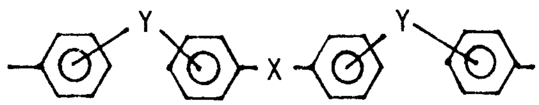

;

X: $-SO_2-$; -CO-;

Y: -O-; -S-;

Z: -O-; -S-; $SO_2$; -CO-; $-CR_2-$;

R: -H; $C_1$ - $C_4$-Alkyl;

n: 0; 1;

in der Schmelze in Gegenwart eines Katalysators bei Temperaturen im Bereich von 200 bis 400 °C, dadurch gekennzeichnet, daß die Reaktion in Gegenwart von Phosphorverbindungen und Metallsalzen, Zinn(II)salze sind ausgenommen, als Katalysator stattfindet, wobei der Gehalt an Phosphorverbindungen und Metallsalzen jeweils 0,05 bis 4 Mol-% - bezogen auf die Summe der Komponenten A. und B. - beträgt, und die Phosphorverbindungen mindestens zu 0,025 Mol-% und die Metallsalze mindestens zu 0,025 Mol-% - jeweils bezogen auf die Summe der Komponenten A. und B. - eingesetzt werden.

**2.** Verfahren nach Anspruch 1, dadurch gekennzeichnet, daß der Gehalt an Phosphorverbindungen und Metallsalzen jeweils 0,2 bis 2 Mol-% beträgt.

**3.** Verfahren nach Anspruch 1 und 2, dadurch gekennzeichnet, daß als Phosphorverbindung Phenylphosphonsäure eingesetzt wird.

**4.** Verfahren nach Anspruch 1 und 2, dadurch gekennzeichnet, daß als Phosphorverbindung eine Säure der allgemeinen Formel $H_3PO_m$ mit m = 2 bis 4 eingesetzt wird.

**5.** Verfahren nach Anspruch 1 bis 4, dadurch gekennzeichnet, daß als Salze Metalle der 1. bis 3. Hauptgruppe des Periodensystems eingesetzt werden.

**6.** Verfahren nach Anspruch 1 und 2 sowie 4 und 5, dadurch gekennzeichnet, daß als Katalysator Metallsalze einer Phosphor enthaltenden Säure der allgemeinen Formel $H_3PO_m$ mit m = 2 bis 4 eingesetzt werden.

**7.** Formmassen auf der Basis der thermoplastisch verarbeitbaren, aromatischen Polyamide, hergestellt nach den Ansprüchen 1 bis 6.